# DEMANDE DE BREVET EUROPEEN

(11) **EP 1 905 853 A1**
(43) Date de publication de la demande: **02.04.2008**
(21) Numéro de dépôt: 06121543.0
(22) Date de dépôt: 29.09.2006
(51) Int. Cl.: C22B 7/00, C22B 1/00, C22B 7/02, F27B 9/18, F26B 17/00, A62D 3/00

(54) **Procédé de traitement thermique de résidus métalliques contaminés par des composés organiques et dispositif pour sa mise en oeuvre**

(71) Demandeur: PAUL WURTH S.A., 1122 Luxembourg (LU)
(72) Inventeur: ROTH, Jean-Luc, 57100, Thionville (FR); PIEZANOWSKI, Ludivine, 54190, VILLERUPT (FR); PELLETIER, Marc, 94160, SAINT-MANDE (FR); LAUDET, Alain, 5000, NAMUR (BE)
(74) Mandataire: Schmitt, Armand

(57) **Abrégé**

Procédé et dispositif de traitement de résidus métalliques divisés, contaminés par un ou des composés organiques, comprenant un brassage à l'intérieur d'une enceinte desdits résidus métalliques avec au moins un composé calco-magnésien capable de réagir avec de l'eau de manière exothermique, une réaction exothermique dudit au moins un composé calco-magnésien avec l'eau que les résidus métalliques contiennent, une élévation de température des résidus métalliques subissant une réaction exothermique, et une déshydratation desdits résidus métalliques pendant cette réaction exothermique, une oxydation des composés organiques au cours dudit brassage, par mise en contact des résidus métalliques contaminés par un ou des composés organiques mélangés audit au moins un composé calco-magnésien avec un courant gazeux contenant au moins partiellement de l'oxygène, et une évacuation hors de l'enceinte d'un produit traité déshydraté, manipulable, qui présente une teneur résiduelle en composés organiques inférieure à 1% en poids dudit produit traité.

## Description

La présente invention est relative à un procédé de traitement et de valorisation de résidus métalliques divisés, contaminés par un ou des composés organiques, en particulier des hydrocarbures. L'invention se rapporte aussi au dispositif pour la mise en oeuvre du procédé.

Par résidus métalliques divisés, on entend un ensemble de poussières, copeaux, lamelles, paillettes et/ou granules solides ou analogues, de nature métallique. Ces résidus métalliques sont principalement sous forme de composés métalliques élémentaires et/ou d'oxydes métalliques, mais ils peuvent aussi apparaître notamment sous des formes soufrées ou chlorées ou en mélange des formes précitées. Ces résidus métalliques divisés sont généralement des co-produits de l'industrie sidérurgique ou des métaux non ferreux. Une des familles de ces résidus métalliques divisés est constituée par les oxydes de laminage à chaud, souvent désignés par le terme de battiture (scale en anglais). Une autre famille comprend les meulures et/ou tournures résultant de l'usinage de pièces métalliques.

Ces résidus métalliques divisés possèdent en général une teneur pondérale élevée en métal, supérieure à 30%, fréquemment supérieure à 50%, voire à 70%, qu'il est souhaitable de valoriser, en particulier dans l'industrie qui les a générés.

Ces résidus métalliques divisés sont très fréquemment contaminés par un ou des composés organiques, en particulier des hydrocarbures, ces derniers pouvant représenter jusqu'à environ 15% de la masse totale. Ils sont alors parfois désignés sous le vocable de pailles grasses et renferment habituellement une teneur variable en eau, qui peut atteindre plus de 20% de la masse totale, d'où leur nature déstructurée; les battitures de laminage en constituent un cas particulier.

La présence de composés organiques rend souvent nécessaire le prétraitement de ces co-produits avant leur recyclage, notamment pour des raisons environnementales, certains de ces composés organiques pouvant être des précurseurs de composés toxiques, tels que les composés organiques volatils (Cov) et les composés organochlorés, dont les plus toxiques sont les polychlorobiphényles (Pcb), les dioxines et les furannes.

Le recyclage direct de ces résidus métalliques divisés pose aussi un autre problème : par leur présence, les composés organiques et l'eau rendent le co-produit très peu manipulable ; il est inhomogène, poisseux et non structuré. C'est notamment le cas lorsqu'on essaie de recycler des battitures de l'industrie sidérurgique dans le procédé d'agglomération du minerai pour l'alimentation de haut-fourneaux. Dans ce cas, outre la difficulté de manutention, des vapeurs d'hydrocarbures vont être dégagées qui encrassent le système de circulation des gaz, en particulier les ventilateurs et les filtres. De plus, les composés organiques précités peuvent se transformer lors du recyclage en composés toxiques ; une dépollution spécifique des gaz doit être prévue.

Afin de respecter les législations relatives aux rejets en composés toxiques précités, la pratique industrielle montre qu'il est nécessaire de limiter fortement la teneur en composés organiques dans les battitures ou autres résidus métalliques divisés, lors de leur recyclage, en raison des limites des procédés de dépollution des gaz, notamment au niveau des filtres.

Il est connu de traiter les battitures huileuses par leur mélange intime à de l'oxyde de calcium, principalement sous la forme de chaux vive. Au chapitre 38 d'un ouvrage reprenant la synthèse récente de l'état de l'art en la matière, l'auteur (F. Bölsing, Dispersing by Chemical Reactions Remediation Technology, in Wise D. et al., Remediation engineering of contaminated soils, Marcel Dekker Inc., 2000) propose un traitement en deux étapes :
- un ajout de chaux vive au milieu contaminé par des hydrocarbures, notamment des battitures sidérurgiques (étape de prédistribution) ;
- un mélange intensif, éventuellement dans un broyeur, de façon à produire un milieu dispersé homogène et à permettre un transfert de l'huile vers la chaux ; la chaux vive CaO capte également tout ou partie de l'eau présente dans les battitures en se transformant en chaux éteinte Ca(OH)₂ (étape de dispersion).

La chaux combinée à l'huile peut alors être facilement séparée des particules de fer ou d'oxydes de fer, par tamisage. Une séparation magnétique peut également permettre de récupérer les plus fines particules métalliques.

En outre, l'auteur signale qu'il est souvent nécessaire de traiter préalablement la chaux vive au moyen d'un additif qui retarde la réaction d'extinction de celle-ci avec l'eau des battitures, sous peine que cette réaction d'extinction très rapide ait lieu avant que l'huile ne puisse être absorbée par la chaux.

Une demande de brevet plus récente US 2005/0256359 signale la possibilité d'utiliser la chaux pour réduire la toxicité de composés organiques, en particulier en éliminant les halogènes de composés toxiques, du type des dioxines, furannes ou polychlorobiphényles. Outre son rôle précité, la chaux intervient comme réactif nucléophile, qui favorise la substitution des halogènes par le groupe hydroxyle et ensuite la dégradation oxydante des molécules substituées, pour donner des molécules organiques pas ou peu toxiques. Des composés organiques non toxiques sont de préférence ajoutés afin de favoriser une auto-inflammation du milieu dispersé. Dans ce document, seuls les rendements de "déshalogénation", but poursuivi, sont précisés mais pas les taux de réduction éventuelle des substances organiques.

On connaît aussi un procédé de traitement de résidus métalliques divisés, contaminés par un ou des composés organiques, en particulier un ou des hydrocarbures, comprenant
- un brassage, à l'intérieur d'une enceinte, desdits résidus métalliques avec au moins un composé calco-magnésien capable de réagir avec de l'eau de manière exothermique,
- une réaction exothermique dudit au moins un composé calco-magnésien avec l'eau que les résidus métalliques contiennent,
- une élévation de température des résidus métalliques subissant une réaction exothermique, et
- une déshydratation desdits résidus métalliques pendant cette réaction exothermique.

Ce procédé est décrit dans la demande de brevet japonaise JP2000-237512. Il propose en particulier une méthode de déshydratation de résidus sidérurgiques, destinés à être réutilisés comme agent de déphosphoration des fontes. Le produit issu de ce traitement est considéré manipulable. Un cas d'application enseigne que l'ajout de 20% de chaux vive en masse aux résidus permet de réduire la teneur en huile libre de 2,9% initialement à 1,9% après traitement, la différence étant absorbée par la chaux. Les auteurs proposent d'utiliser ces résidus traités contenant de l'huile en partie absorbée comme matériau auxiliaire dans la sidérurgie, où l'huile sera brûlée, selon les auteurs, sans effet négatif sur l'acier fondu.

Enfin, on décrit dans le brevet US 4 326 883 un procédé de déshuilage et d'agglomération de battitures. Il consiste en deux étapes :
LA PREPARATION - Cette étape essentielle comprend l'addition de chaux vive aux battitures, suivie d'un mélange intime, éventuellement en présence d'un ajout d'eau, puis d'une agglomération ou bouletage *(pelletisation)* du mélange obtenu, éventuellement par ajout d'eau supplémentaire. La chaux sert donc de liant et d'agent déshydratant. L'étape de mélange est considérée comme critique. Elle doit permettre que la chaux extraie l'humidité, l'huile et les fines battitures en les séparant des battitures grossières. Le but est de faire en sorte que la majorité de l'huile, initialement contenue dans les battitures, se retrouve finalement dans la couche superficielle de chaque boulette formée. Afin d'obtenir ce résultat, il est préférable de précribler les battitures. La phase de préparation se termine par un séchage des boulettes dans une ambiance à une température inférieure à 345°C. Cette température est limitée afin d'éviter que les boulettes ne s'échauffent au-delà de 120°C, ce qui provoquerait leur éclatement. Les boulettes présentent en effet une bonne résistance à la compression, nécessaire aux étapes suivantes du recyclage.
LA COMBUSTION - Dans cette étape ultérieure, les boulettes sont chauffées en atmosphère oxydante à une température suffisante pour provoquer l'inflammation et une combustion quasi complète de l'huile contenue dans les boulettes. Les boulettes avancent en un lit mobile de 2,5 à 7,5 cm d'épaisseur de façon à séjourner durant 0,5 minute à 2 minutes dans une atmosphère comprise entre 815°C et 1100°C, en veillant à ce que les boulettes ne dépassent pas une température de 345°C. L'importance de l'étape de préparation ci-dessus se traduit par la possibilité d'une élimination quasi complète, en un temps très court, de l'huile présente en surface des boulettes. Cette technique permet d'utiliser le pouvoir calorifique de l'huile, de façon à réduire la consommation de combustible externe, qui reste toutefois importante.

Le brevet US 4 326 883 est cependant limité dans sa description et ses exemples à des battitures ne contenant pas plus de 1% d'huile. Probablement, est-il difficile, à des teneurs en huile plus élevées, d'assurer la réalisation de boulettes pour lesquelles l'huile sera principalement présente en couche de surface, afin de permettre la combustion "flash" de celle-ci, en moins de 2 minutes.

Afin de remédier aux inconvénients de l'art antérieur précité, la présente invention a pour but de proposer un procédé et un dispositif de traitement des résidus métalliques divisés, contaminés par des composés organiques, qui soient simples et adaptés à un large intervalle de teneurs en composés organiques et qui permettent de limiter au strict minimum l'apport énergétique par des combustibles externes, tout en fournissant un produit particulièrement valorisable.

Pour résoudre ces problèmes, l'invention propose un procédé qui comprend les étapes :
- un brassage à l'intérieur d'une enceinte desdits résidus métalliques avec au moins un composé calco-magnésien capable de réagir avec de l'eau de manière exothermique,
- une réaction exothermique dudit au moins un composé calco-magnésien avec l'eau que les résidus métalliques contiennent,
- une élévation de température des résidus métalliques subissant une réaction exothermique,
- une déshydratation desdits résidus métalliques pendant cette réaction exothermique,
- une oxydation des composés organiques au cours dudit brassage, par mise en contact des résidus métalliques contaminés par un ou des composés organiques mélangés audit au moins un composé calco-magnésien avec un courant gazeux contenant au moins partiellement de l'oxygène, et
- une évacuation hors de l'enceinte d'un produit traité déshydraté, manipulable, qui présente une teneur résiduelle en composés organiques inférieure à 1% en poids dudit produit traité.

Selon l'invention, un composé calco-magnésien est donc ajouté aux résidus métalliques divisés, contaminés, dans une enceinte adaptée aux traitements thermiques, qui est balayée par un courant gazeux, dans laquelle avantageusement l'ensemble du traitement s'opère, donc de préférence en une seule étape. Aucune préparation ou préconditionnement préalable des matières à traiter ni du composé calco-magnésien, ni de leur mélange n'est nécessaire. Comme dans la pratique, les résidus contiennent souvent suffisamment d'eau, le procédé suivant l'invention ne demande, en principe, aucun ajout d'eau ou même de réactifs complémentaires. Le produit sortant de ladite enceinte est déshydraté, aisément manipulable et présente une teneur en composés organiques très faible. Ce produit est alors directement valorisable, notamment dans l'industrie à l'origine du métal récupéré.

L'invention propose donc principalement en un procédé substantiellement autotherme d'élimination de composés organiques, en particulier d'hydrocarbures, à partir de résidus métalliques contaminés, au moyen d'un composé calco-magnésien.

Suivant l'invention, ledit au moins un composé calco-magnésien répond à la formule I

xCaO.(1-x)MgO (I)

dans laquelle x est une fraction molaire supérieure à 0 et égale ou inférieure à 1.

Ce composé se présente de préférence sous la forme de particules solides, principalement sous forme d'oxyde. Ce composé calco-magnésien peut comprendre des impuretés, telles que de la silice, de l'alumine, de l'oxyde de fer, du carbonate de calcium, à hauteur de quelques pour-cents et de l'hydroxyde correspondant aux oxydes de la formule (I).

Un cas particulier de composé calco-magnésien est la chaux vive, correspondant au cas où x vaut "1" dans la formule (I), laquelle peut aussi comprendre les impuretés précitées ainsi qu'un peu d'oxyde de magnésium.

Bien qu'il soit possible en principe de démarrer la réaction d'oxydation uniquement par l'énergie apportée par la réaction exothermique de la chaux vive avec l'eau, il peut être avantageux de fournir en outre de l'énergie d'activation initiale. Suivant un mode de réalisation avantageux de l'invention, le procédé comprend donc en outre
- un apport initial de chaleur pour favoriser un démarrage de ladite réaction d'oxydation des composés organiques contenus dans les résidus métalliques et atteindre une température prédéterminée des résidus métalliques contaminés, et
- un arrêt de cet apport lorsque ladite température prédéterminée est atteinte, le procédé étant alors substantiellement autotherme en régime.

Dans le procédé selon l'invention, une quantité minimale de chaleur peut être apportée par tout type de chauffage connu en soi, à priori surtout ou uniquement en phase de démarrage. La température prédéterminée atteinte est ensuite maintenue essentiellement ou totalement par des réactions exothermiques qui se déroulent dans l'enceinte.

Le terme « autotherme » dans le cadre de la présente invention signifie que le procédé ne nécessite en principe plus d'apport d'énergie extérieure, les réactions pouvant être contrôlées entièrement par le réglage du courant gazeux contenant au moins partiellement de l'oxygène et des alimentations en résidus métalliques et en composé calco-magnésien.

De préférence, la teneur résiduelle en composés organiques du produit traité est inférieure à 0,5% en poids, avantageusement inférieure à 0,2% en poids, en particulier inférieure à 0,1 % en poids.

Avantageusement, pendant le traitement, les résidus métalliques présentent une température de l'ordre de ≥ 300°C à ≤ 600°C. Typiquement les différentes transformations sont opérées à des températures de 300°C à 550°C, ce qui permet l'utilisation de solutions légères de protection des parois de l'enceinte de traitement, sans nécessiter le recours à des briques réfractaires. Outre les entrées des matières précitées, l'enceinte doit permettre l'entrée de gaz frais contenant de l'oxygène, notamment de l'air, et la sortie des gaz chauds. Un moyen d'homogénéisation des matières introduites assure le brassage continu et une aération de la charge solide, constituée par lesdits résidus métalliques contaminés et ledit au moins un composé calco-magnésien. Cette charge peut rester environ 0,25 h à 5 h, de préférence 0,5 h à 2 h dans l'enceinte de traitement, de façon à obtenir le produit traité.

Les résidus contaminés peuvent contenir de préférence jusqu'à environ 15% en poids de composés organiques et plus de 20% en poids d'eau, par exemple jusqu'à 30% en poids. Généralement, ils contiennent de 2% à 6% de composés organiques et 10% à 15% en poids d'eau.

Le produit traité est déshydraté et se présente sous une forme pulvérulente, aisément manipulable et même éventuellement granulable par simple ajout d'eau.

La quantité de composé calco-magnésien ajouté aux résidus métalliques contaminés dépend principalement de la quantité de composés organiques, mais aussi de l'eau présente initialement dans ces résidus. De manière générale, le composé calco-magnésien représente de 5% à 35%, de préférence de 8% à 20%, souvent de l'ordre de 10%, de la masse totale de la charge solide précitée.

Suivant un mode particulier de réalisation de l'invention, le procédé comprend un déplacement de ladite charge solide dans l'enceinte au cours du brassage avec alimentation du courant gazeux en contre-courant de la charge solide. Le procédé comprend avantageusement, au cours du brassage des résidus et de leur mise en contact avec un courant gazeux, une oxydation quasi complète des composés organiques qui se transforment essentiellement en eau et CO₂.

Suivant un mode de réalisation perfectionné de l'invention, le procédé comprend un recyclage, de préférence direct, dans un processus métallurgique ou sidérurgique dudit produit traité, formé substantiellement de composés métalliques éventuellement partiellement oxydés et dudit au moins un composé calco-magnésien hydraté et éventuellement aussi carbonaté. L'absence quasi totale de composés organiques résiduels rend le produit traité selon l'invention directement recyclable. En particulier dans le cas des battitures, celles-ci pourraient être directement recyclées dans le processus d'agglomération du minerai, avant le haut-fourneau. La présence du composé calco-magnésien est par ailleurs bénéfique au processus d'agglomération précité.

D'autres particularités du procédé suivant l'invention sont indiquées dans les revendications annexées.

La présente invention concerne également un dispositif de traitement de résidus métalliques divisés, contaminés par des composés organiques. Ce dispositif comprend une enceinte, avantageusement thermiquement résistante, qui présente
- au moins une entrée pour matières solides par où lesdits résidus contaminés et au moins un composé calco-magnésien capable de réagir avec l'eau de manière exothermique sont introduits dans l'enceinte,
- au moins un élément mélangeur qui brasse lesdits résidus contaminés et ledit au moins un composé calco-magnésien, et
- au moins une sortie pour matières solides, par où est évacué un produit traité déshydraté, manipulable.

Suivant l'invention, l'enceinte de ce dispositif présente en outre
- au moins une entrée de gaz pour introduire dans l'enceinte un courant gazeux contenant au moins partiellement de l'oxygène, et
- au moins une sortie de gaz,
- le produit traité susdit évacué à ladite au moins une sortie pour matières solides présentant une teneur résiduelle en composé organique inférieure à 1 % en poids dudit produit traité.

Suivant une forme avantageuse de réalisation du dispositif suivant l'invention, ladite au moins une entrée pour matières solides se trouve à une extrémité de l'enceinte et ladite au moins une sortie pour matières solides est située à une extrémité opposée de l'enceinte, les résidus susdits mélangés audit au moins un composé calco-magnésien étant déplacés entre ladite au moins une entrée pour matières solides et ladite au moins une sortie pour matières solides, et ladite au moins une entrée de gaz et ladite au moins une sortie de gaz sont agencées dans l'enceinte de manière que ledit courant gazeux passe en contre-courant des résidus mélangés susdits.

Un tel dispositif permet avantageusement un procédé en continu et en une étape. On pourra par exemple faire usage d'une enceinte multi-zone verticale (enceinte multi-étagée) ou horizontale, avec alimentation séparée des résidus contaminés et du composé calco-magnésien. Dans ce cas, la première zone (zone d'alimentation), par exemple l'étage supérieur de l'enceinte en version verticale, sert à collecter les deux alimentations de matières solides et à leur brassage continu au moyen d'un dispositif d'homogénéisation. L'étage d'alimentation sert aussi au préchauffage de la charge solide par les gaz chauds qui s'en échappent. Les autres zones ou étages, situés plus bas, permettent d'assurer un temps de séjour suffisant, tout en aérant la matière et en faisant circuler le flux gazeux, de préférence à contre-courant de la matière solide. Il est ainsi possible de contrôler l'oxydation des matières solides. La dernière zone ou étage inférieur, de sortie, sert surtout au préchauffage des gaz par les solides et inversement au refroidissement de ces derniers par les gaz frais.

Il est également possible d'utiliser une enceinte cylindrique légèrement inclinée par rapport à l'horizontale, avec avancée gravitaire de la matière, soit par mouvement de l'enceinte avec un dispositif de brassage fixe, soit par le mouvement de l'organe de brassage dans une enceinte fixe ou par une combinaison de ces deux possibilités.

Dans un tel dispositif selon l'invention, la température maximale de la charge solide ne dépasse pas 600°C et est typiquement comprise entre 300°C et 550°C. Les gaz frais, circulant de préférence à contre-courant, refroidissent la charge solide avant sa sortie de l'enceinte, tout en s'échauffant au contact de celle-ci. De façon similaire, les gaz chauds réchauffent la charge solide dans l'étage où ont lieu les deux alimentations en matières solides et leur homogénéisation.

De manière surprenante, il apparaît qu'il est ainsi possible d'effectuer le traitement de résidus contaminés en résidus traités selon l'invention, sans apport ou quasiment sans apport calorifique externe, à savoir sans utilisation de combustible spécifique, du moins en régime établi de fonctionnement. Un apport énergétique n'est éventuellement nécessaire que pour une montée initiale en température dans une phase de démarrage.

Afin d'obtenir ce résultat, il est nécessaire de tirer parti de la chaleur générée par l'ensemble des réactions exothermiques qui se déroulent durant le traitement. Cet objectif est atteint suivant l'invention où le procédé de traitement s'effectue en une seule étape, dans une enceinte unique.

Les différentes réactions exothermiques qui ont lieu dans l'enceinte de traitement sont :
- l'extinction ou hydratation du composé calco-magnésien avec l'eau présente dans les résidus contaminés, à savoir la transformation de l'oxyde de calcium et/ou de magnésium en hydroxyde correspondant,
- l'oxydation quasiment totale de la plupart des composés organiques, qui se transforment essentiellement en eau et en CO₂,
- la carbonatation du composé calco-magnésien,
- éventuellement l'oxydation au moins partielle des composés métalliques des résidus contaminés en oxydes métalliques correspondants.

De façon étonnante, il apparaît que le contrôle des conditions en termes de temps de séjour, d'aération de la matière et de température permet que l'oxydation des composés métalliques, associée au cumul des dégagements calorifiques des autres réactions, rende le processus autotherme, du moins en régime établi.

D'autres particularités du dispositif suivant l'invention sont indiquées dans les revendications annexées.

D'autres détails et particularités de l'invention ressortiront de la description donnée ci-après à titre non limitatif, avec référence aux dessins annexés.

La figure 1 représente une vue en coupe schématique d'un dispositif de traitement suivant l'invention.

La figure 2 représente une vue en coupe d'une variante de réalisation.

Sur les différentes figures, les éléments identiques ou analogues sont désignés par les mêmes références.

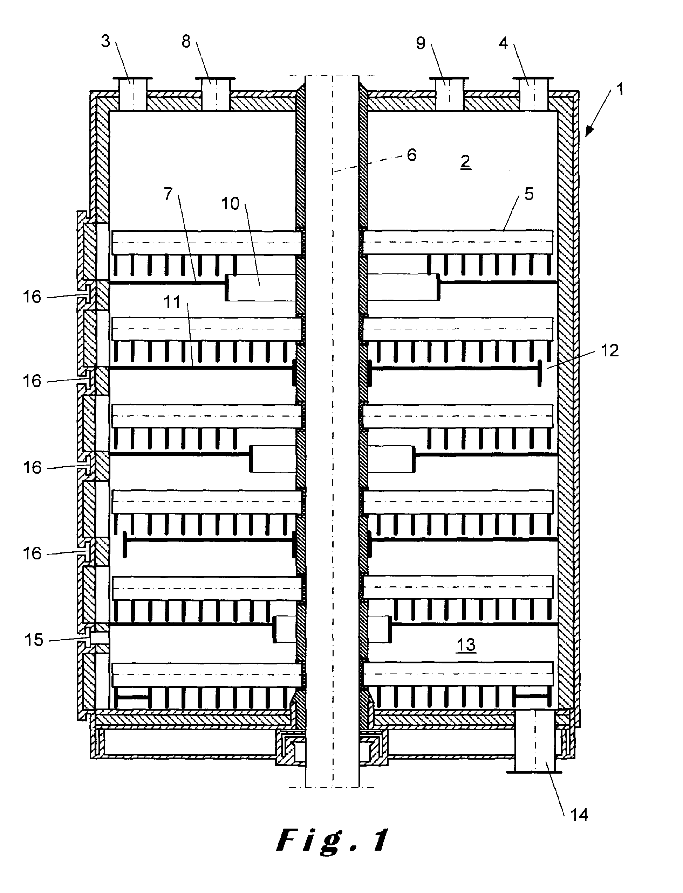

Un appareillage préféré pour la réalisation du procédé selon l'invention est présenté à la figure 1 pour le cas particulier du traitement de battitures sidérurgiques.

L'équipement illustré sur la figure 1 consiste en une enceinte 1 multi-étagée, permettant un traitement à des températures allant jusqu'à 600°C, ce qui autorise l'utilisation d'une technologie sans réfractaire, facile à réaliser et peu coûteuse. Cette enceinte est avantageusement équipée de brûleurs externes non représentés, qui permettent un apport calorifique, si nécessaire, à savoir si la température de l'enceinte descend en dessous de 300°C. L'étage supérieur 2 (étage d'alimentation) prévoit l'alimentation en battitures contaminées et en composé calco-magnésien, de préférence par deux entrées séparées 3 et 4. L'étage d'alimentation 2 comprend en outre un moyen d'homogénéisation, de préférence sous la forme d'un ou de plusieurs râteaux 5 tournant autour d'un axe central 6 en brassant les matières solides qui s'accumulent sur la sole fixe 7. On peut aussi prévoir le ou les râteaux fixes en présence d'une sole tournante des râteaux et des soles mobiles ou une combinaison de ces variantes. Dans l'exemple illustré, deux sorties de gaz 8 et 9 permettent l'évacuation des gaz chauds ascendants, après échange calorifique avec la matière solide alimentée.

Cette matière solide préchauffée tombe, par débordement au travers d'un trou central 10, sur la sole 11 de l'étage sous-jacent; au cours de cette cascade, un échange s'opère entre le flux gazeux et la matière solide. La sole 11 est pourvue d'un ou de plusieurs orifices périphériques 12 par lesquels la matière solide brassée par au moins un nouveau râteau passe à l'étage sous-jacent. De manière analogue, la matière solide est acheminée par étapes successives jusqu'au dernier étage (étage de sortie 13), tout en subissant un brassage avec un maximum d'échanges entre la matière solide et le flux gazeux, en particulier de façon à favoriser les réactions d'oxydation précitées.

L'étage de sortie 13 sert surtout au préchauffage des gaz frais et au refroidissement des battitures traitées. Il comprend notamment une sortie 14 pour l'évacuation de ces dernières et une entrée de gaz 15 permettant l'introduction d'un gaz contenant de l'oxygène.

Le nombre d'étages du dispositif est principalement fonction du temps de séjour nécessaire à l'oxydation la plus complète des composés organiques initialement présents. De l'air chauffé ou non peut éventuellement être introduit en supplément au niveau de chaque étage par les entrées de gaz 16.

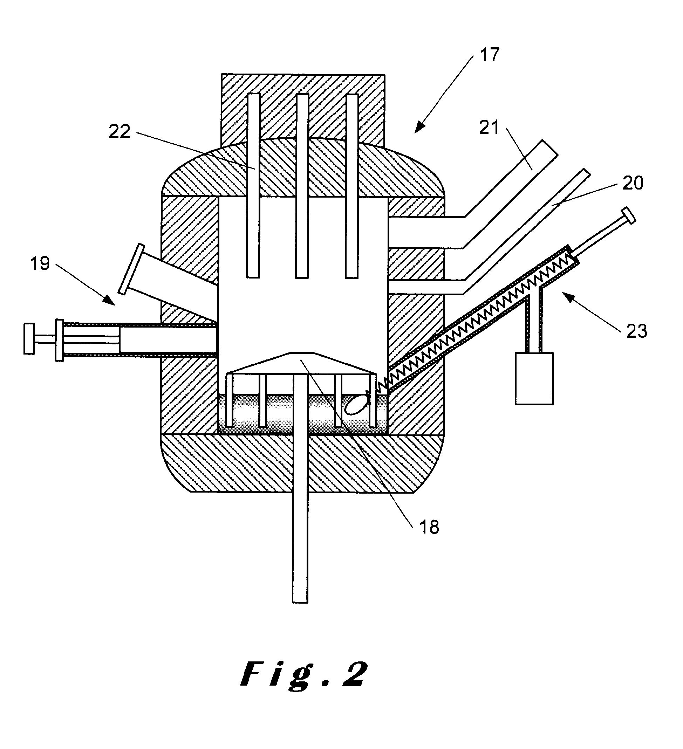

La figure 2 présente une enceinte mono-étage 17, chauffable par éléments chauffants électriques 22, de forme cylindrique et équipée d'un râteau 18 tournant à environ 3 tpm. Elle est munie d'un équipement d'introduction des matières solides 19, d'une entrée d'air 20 et d'une évacuation des gaz 21 ainsi que d'une canne 23 de mesure de la température de la matière solide et de prélèvement d'échantillons.

Dans tous les exemples donnés ci-après, des battitures de laminage sont traitées à la chaux vive de qualité industrielle. La teneur en hydrocarbures initiale des battitures contaminées ou finale des battitures traitées est déterminée par extraction au tétrahydrofuranne en Soxhlet suivie par une distillation au « Rotavapor ». Les battitures contaminées sont préalablement séchées à 105°C. Lorsque la teneur mesurée en hydrocarbures est inférieure à 0,1%, on considère que les battitures traitées sont exemptes d'hydrocarbures résiduels.

Dans tous les cas, les battitures sont traitées dans un équipement pilote, tel que celui présenté à la figure 2, selon un mode opératoire commun.

Les conditions opératoires sont les suivantes.
- Préchauffage du four à la température initiale prédéterminée
- Introduction de la matière en alternance chaux / battitures
- Brassage du mélange en continu
- Mesure de la température de la matière solide, de façon à suivre l'évolution des réactions exothermiques
- Prélèvement d'un échantillon en fin d'essai
- Blocage de la réaction dans le prélèvement par contact avec azote liquide (refroidissement et atmosphère sans oxygène)
- Mesure de la teneur en hydrocarbures résiduelle dans l'échantillon prélevé.

### Exemple 1

7,4 kg de battitures contenant 6% en poids d'hydrocarbures et 14% en poids d'eau sont traités dans l'équipement pilote avec 1,6 kg de chaux, soit un apport en chaux de 18 % en poids.

Deux traitements analogues sont réalisés en faisant varier la température initiale de traitement : le premier cas à 200°C, le second à 300°C. Dans les deux cas, le produit traité est de nature pulvérulente, aisément manipulable et sa teneur résiduelle en hydrocarbure est inférieure à 0,1%.

A une température initiale de 200°C, il existe une période d'induction d'environ 1,5 h avant un dégagement significatif de chaleur par les réactions d'oxydation, qui rend le fonctionnement autotherme. Il n'y a pas d'apport externe de chaleur à partir de ce moment. La température maximale de la matière solide avoisine 450°C. Un temps de séjour global d'environ 3 h est nécessaire afin d'éliminer complètement les hydrocarbures.

A 300°C, la période d'induction ne dépasse pas 0,5 h ; la température maximale de la matière solide est plus élevée, légèrement supérieure à 500°C. Le temps de séjour nécessaire à l'oxydation de la totalité des hydrocarbures est inférieur à 2 h.

Cet exemple montre l'utilité de disposer d'un appoint de chaleur externe de façon à réduire significativement la période d'induction et partant le temps de séjour global pour l'oxydation complète des hydrocarbures.

### Exemple 2

On traite des battitures contaminées par 1,7% en poids d'hydrocarbures et 14% en poids d'eau à une température initiale de 300°C. Une proportion d'ajout de chaux vive de 18% en poids est utilisée, soit 1,6 kg de chaux pour 7,4 kg de battitures. Le produit traité est de nature pulvérulente, aisément manipulable et sa teneur résiduelle en hydrocarbures est inférieure à 0,1%.

Cette expérience est comparée à la seconde de l'exemple 1, effectuée dans des conditions analogues (300°C - 18% chaux) mais au départ de battitures plus contaminées en hydrocarbures (6%).

Lorsque la teneur initiale en hydrocarbures est plus faible, la température maximale atteinte par la matière solide est plus basse, en dessous de 500°C, et apparaît après un temps de séjour plus court, moins d'1,5 h.

### Exemple 3

Le traitement thermique de charges contenant des hydrocarbures conduit généralement à l'émission importante de Composés organiques volatils (Cov). Il est donc utile d'estimer la situation dans le cas d'un traitement selon l'invention.

10 kg de battitures contenant 2,9% en poids d'hydrocarbures et 19% en poids d'eau sont traités à une température initiale de 300°C dans l'équipement pilote de la figure 2 avec 2,5 kg de chaux vive, soit un apport en chaux de 20% en poids. Le produit traité est de nature pulvérulente, aisément manipulable et sa teneur résiduelle en hydrocarbures est inférieure à 0,1%.

Dans les conditions de cette expérience, une teneur moyenne en Cov de 1500 mg/Nm³ à l'évacuation des gaz serait observée, si le carbone des hydrocarbures des battitures se retrouvait intégralement converti en Cov. En réalité, une mesure de Cov durant l'expérience révèle par contre une teneur moyenne beaucoup plus faible, inférieure à 60 mg/Nm³. Grâce à ce procédé de traitement avec la chaux, l'émission de Cov est donc environ 25 fois plus faible en moyenne.

Il doit être entendu que la présente invention n'est en aucune façon limitée aux modes de réalisation décrits ci-dessus et que bien des modifications peuvent y être apportées sans sortir du cadre des revendications annexées.

## Revendications

1. Procédé de traitement de résidus métalliques divisés, contaminés par un ou des composés organiques, comprenant
- un brassage à l'intérieur d'une enceinte desdits résidus métalliques avec au moins un composé calco-magnésien capable de réagir avec de l'eau de manière exothermique,
- une réaction exothermique dudit au moins un composé calco-magnésien avec l'eau que les résidus métalliques contiennent,
- une élévation de température des résidus métalliques subissant une réaction exothermique, et
- une déshydratation desdits résidus métalliques pendant cette réaction exothermique,
- une oxydation des composés organiques au cours dudit brassage, par mise en contact des résidus métalliques contaminés par un ou des composés organiques mélangés audit au moins un composé calco-magnésien avec un courant gazeux contenant au moins partiellement de l'oxygène, et
- une évacuation hors de l'enceinte d'un produit traité déshydraté, manipulable, qui présente une teneur résiduelle en composés organiques inférieure à 1 % en poids dudit produit traité.

2. Procédé suivant la revendication 1, **caractérisé en ce que** ledit au moins un composé calco-magnésien répond à la formule I
xCaO.(1-x)MgO (I)
dans laquelle x est une fraction molaire supérieure à 0 et égale ou inférieure à 1.

3. Procédé suivant l'une des revendications 1 et 2, **caractérisé en ce qu'**il comprend en outre
- un apport initial de chaleur pour favoriser un démarrage de ladite réaction exothermique et atteindre une température prédéterminée des résidus métalliques contaminés, et
- un arrêt de cet apport lorsque ladite température prédéterminée est atteinte, le procédé étant alors autotherme en régime.

4. Procédé suivant l'une quelconque des revendications 1 à 3, **caractérisé en ce que** la teneur résiduelle en composés organiques du produit traité est inférieure à 0,5% en poids.

5. Procédé suivant l'une quelconque des revendications 1 à 4, **caractérisé en ce que**, pendant le brassage, les résidus métalliques présentent une température de l'ordre de 300°C à 600°C.

6. Procédé suivant l'une quelconque des revendications 1 à 5, **caractérisé en ce que** le courant gazeux susdit est un courant d'air.

7. Procédé suivant l'une quelconque des revendications 1 à 6, **caractérisé en ce que** le composé calco-magnésien représente de 5 à 35% de la masse totale constituée desdits résidus métalliques et du composé calco-magnésien.

8. Procédé suivant l'une quelconque des revendications 1 à 7, **caractérisé en ce qu'**il comprend, au cours du brassage, un déplacement dans l'enceinte des résidus métalliques mélangés audit au moins un composé calco-magnésien avec alimentation du courant gazeux susdit en contre-courant des résidus métalliques.

9. Procédé suivant l'une quelconque des revendications 1 à 8, **caractérisé en ce que** les résidus contaminés contiennent jusqu'à environ 15% en poids de composés organiques et jusqu'à environ 30% en poids d'eau.

10. Procédé suivant l'une quelconque des revendications 1 à 9, **caractérisé en ce que**, dans l'enceinte, les résidus métalliques sont brassés avec ledit au moins un composé calco-magnésien et mis en contact avec ledit courant gazeux pendant un temps de séjour de 0,25 h à 5 h.

11. Procédé suivant l'une quelconque des revendications 1 à 10, **caractérisé en ce qu'**il comprend un recyclage dans un processus métallurgique ou sidérurgique dudit produit traité, formé substantiellement de composés métalliques éventuellement partiellement oxydés et dudit au moins un composé calco-magnésien hydraté et éventuellement aussi carbonaté.

12. Dispositif de traitement de résidus métalliques divisés, contaminés par des composés organiques, comprenant une enceinte (1, 17) présentant
- au moins une entrée pour matières solides (3, 4, 19) par où lesdits résidus métalliques et au moins un composé calco-magnésien capable de réagir avec l'eau de manière exothermique sont introduits dans l'enceinte,
- au moins un élément mélangeur (5, 18) qui brasse lesdits résidus métalliques et ledit au moins un composé calco-magnésien, et
- au moins une sortie pour matières solides (14), par où est évacué un produit traité déshydraté, manipulable,
- au moins une entrée de gaz (15, 16, 20) pour introduire dans l'enceinte un courant gazeux contenant au moins partiellement de l'oxygène, et
- au moins une sortie de gaz (8, 9, 21),
- ledit produit traité évacué à ladite au moins une sortie pour matières solides (14) présentant une teneur résiduelle en composés organiques inférieure à 1 % en poids dudit produit traité.

13. Dispositif suivant la revendication 12, **caractérisé en ce qu'**il comprend en outre un ou plusieurs moyens de chauffage initial (22) pour permettre aux résidus métalliques d'atteindre une température prédéterminée qui favorise un démarrage d'une réaction d'oxydation des composés organiques contenus dans les résidus métalliques.

14. Dispositif suivant l'une des revendications 12 et 13, **caractérisé en ce que** ladite au moins une entrée pour matières solides (3, 4) se trouve à une extrémité de l'enceinte (1) et ladite au moins une sortie pour matières solides (14) est située à une extrémité opposée de l'enceinte, les résidus métalliques susdits mélangées audit au moins un composé calco-magnésien étant déplacés entre ladite au moins une entrée et ladite au moins une sortie, et **en ce que** ladite au moins une entrée de gaz (15, 16) et ladite au moins une sortie de gaz (8, 9) sont agencées dans l'enceinte de manière que ledit courant gazeux passe en contre-courant des résidus métalliques mélangés audit au moins un composé calco-magnésien.

15. Dispositif suivant l'une quelconque des revendications 12 à 14, **caractérisé en ce que** l'enceinte comprend deux ou plusieurs étages disposés l'un au-dessus de l'autre, dont
- un étage supérieur comportant au moins une entrée pour les résidus métalliques à traiter et au moins un composé calco-magnésien, ainsi qu'une sortie pour le courant gazeux contenant de l'oxygène,
- un étage inférieur comportant au moins une sortie pour le produit traité, et au moins une entrée pour le courant gazeux contenant de l'oxygène,
- éventuellement un ou plusieurs étages intermédiaires, les étages de l'enceinte étant en communication de manière que lesdites matières solides descendent de l'étage supérieur, le cas échéant en passant par le ou les étages intermédiaires, à l'étage inférieur par gravité et que le courant gazeux contenant de l'oxygène traverse de manière ascendante lesdites matières solides.

16. Dispositif suivant la revendication 15, **caractérisé en ce qu'**au moins un desdits étages comprend un mélangeur.
